# EUROPÄISCHE PATENTSCHRIFT

(11) **EP 0 636 759 B1**
(45) Veröffentlichungstag und Bekanntmachung des Hinweises auf die Patenterteilung: **15.04.1998**
(21) Anmeldenummer: 94110548.8
(22) Anmeldetag: 07.07.1994
(51) Int. Cl.: E05B 53/00, F16C 1/22

(54) **Türschliesseinrichtung für Kraftwagentüren**
Locking device for vehicle doors
Dispositif de fermeture pour portes de véhicules

(30) Priorität: 28.07.1993 DE 4325266
(43) Veröffentlichungstag der Anmeldung: 01.02.1995
(73) Patentinhaber: ED. SCHARWÄCHTER GmbH & Co. KG, D-42809 Remscheid (DE)
(72) Erfinder: Klüting, Bernd-Alfred, D-42477 Radevormwald (DE); Klingelhöfer, Friedrich G., D-42857 Remscheid (DE)
(74) Vertreter: Schön, Theodor, Patent- und Zivilingenieur

(56) Entgegenhaltungen:
- EP-A- 0 022 604
- EP-A- 0 271 106
- EP-A- 0 475 017
- EP-A- 0 612 901
- FR-A- 2 212 846
- GB-A- 2 210 946
- US-A- 2 943 879
- US-A- 4 662 109
- US-A- 4 987 793

## Beschreibung

Die Erfindung bezieht sich auf eine Türschließeinrichtung für Kraftwagentüren, welche vermittels eines insbesondere aus wenigstens einem Tragteil und wenigstens einem Steuerteil bestehenden Gelenkparallelogrammes um zwei Achsen schwenkbar, derart an der Fahrzeugkarosserie aufgehängt sind, daß sie beim Öffnen und Schließen der Türe jeweils eine von einer Querbewegung überlagerte Schwenkbewegung ausführen und bei welchen an den beiden eine Türöffnung in der Fahrzeugkarosserie begrenzenden Türsäulen , insbesondere A-und B-Säule jeweils mindestens ein feststehender Schließbügel oder Schließbolzen und an beiden Stirnenden der Kraftwagentüre mindestens je eine Drehfalle angeordnet ist, deren erste durch die Schloßfalle des Türschlosses und deren zweite durch eine klinkenartig ausgebildete Drehfalle gebildet ist, wobei die beiden Drehfallen über Druck-und Zugkräfte übertragende Antriebsverbindungsmittel derart miteinander in Antriebsverbindung stehen, daß die erste Drehfalle die treibende und die zweite Drehfalle die geschleppte Drehfalle ist.

In herkömmlicher Weise als sog. Schlagtüren ausgebildete und durch ihre einseitige Anlenkung um eine feststehende Achse gekennzeichnete Kraftwagentüren werden beim Schliessen üblicherweise mit Schwung zugeschlagen, da beim Schließen der Türe der hohe Anpressdruck der Dichtung zwischen Tür und Karosserie überwunden werden muß, bevor die Türe ihre zur Karosserie fluchtende und damit auch ihre voll eingerastete Schließlage erreichen kann. Für solche Kraftwagentüren sind zur Vermeidung der Notwendigkeit eines allzu heftigen Zuschlagens der Fahrzeugtür bereits Zuzieheinrichtungen bekannt geworden, die gewöhnlich aus einer mittels Motorkraft angetriebenen, eine Fang-bzw. Vorrastund eine Schließ-bzw. Hauptraststellung aufweisenden Türschloßfalle bestehen, und solcherart arbeiten, daß beim Schließen der Türe die Schloßfalle den karosserieseitig feststehend angeordneten Schließbolzen oder Schließbügel erfaßt. sobald sich die Türe in einer ihrer zur Karosserie fluchtenden Schließlage angenäherten Stellung befindet und anschließend durch den Motor weiter angetrieben wird, wodurch sie die Türe entgegen dem Dichtungsdruck in ihre zur Fahrzeugkarosserie fluchtende und verriegelte Schließlage zieht.

Bei Kraftwagentüren, welche an ihrem einen Ende vermittels eines insbesondere aus einem Tragteil und wenigstens einem Steuerteil bestehenden Gelenkparallelogrammes derart an der Fahrzeugkarosserie aufgehängt sind, daß sie beim Öffnen und Schließen eine von einer Querbewegung überlagerte Schwenkbewegung ausführen ist es zum einen nicht oder nur sehr schwer möglich deren zur Karosserie fluchtende Lage mittels eines bloßen Zuschlagens der Türe herbeizuführen und kann die Türe zum anderen auch nicht durch eine lediglich mit dem Türschloß gekoppelte Zuzieheinrichtung in ihre Schließlage gezogen werden.

Aus der US-PS 4 662 109 ist zwar bereites eine Türverriegelungseinrichtung für Schiebetüren, die beim Ein-und Auslaufen in bzw. aus ihrer Schließlage bezüglich ihrer beiden Stirnseiten eine quer zur Fahrzeugkarosserie gerichtete Bewegung ausführen, bekannt, welche sich dadurch auszeichnet, daß der dem vorderen und dem hinteren Türende jeweils wenigstens eine in Abhängigkeit von der Betätigung des Türgriffes mittels Seilzug oder Gestänge antreibbare Drehfalle zugeordnet ist, wobei jedoch mit Rücksicht auf die für Schiebetüren charakteristischen Betriebsbedingungen die Anordnung so getroffen ist, daß sämtliche Drehfallen beim Einlaufen der Schiebetüre in ihre Schließlage selbsttätig und ohne Rückwirkung auf den Türgriff verschwenkt und mit dem zugehörigen Schließbügel oder dergl. in Eingriff gebracht und lediglich beim Öffnen der Türe durch den Türgriff angetrieben werden.
Derartige Anordnungen tragen zwar dem für Schiebetüren charakteristischen Umstand, daß eine Schiebetür beim Schließen durch den ihr innewohnenden und aus der Schiebebewegung der Türe resultierenden Schwung selbsttätig und sicher in die völlige Schließlage einläuft, Rechnung und sind daher auch nicht oder jedenfalls nicht ohne Weiteres bei Kraftwagentüren, welche an ihrem einen Ende vermittels eines Gelenkparallelogrammes derart an der Fahrzeugkarosserie aufgehängt sind, daß sie beim Öffnen und Schließen eine von einer Querbewegung überlagerte Schwenkbewegung ausführen, und bei denen es daher insbesondere auf die Erzielung eines Zuzieheffektes ankommt, anwendbar.

Die zwar prioritätsältere aber nicht vorveröffentlichte EP-0S 0 612 901 bezieht sich auf eine Türschließeinrichtung für vermittels eines insbesondere aus wenigstens einem Tragteil und wenigstens einem Steuerteil bestehenden Gelenkparallelogrammes derart um zwei Achsen schwenkbar, an der Fahrzeugkarosserie aufgehängte Kraftwagentüren, daß sie beim Öffnen und Schließen jeweils eine von einer Querbewegung überlagerte Schwenkbewegung ausführen. Bei dieser Türschließeinrichtung ist an den beiden eine Türöffnung in der Fahrzeugkarosserie begrenzenden Türsäulen, insbesondere A-und B-Säule jeweils mindestens ein feststehender Schließbügel oder Schließbolzen und an beiden Stirnenden der Kraftwagentüre mindestens je eine Drehfalle, deren erste durch die Schloßfalle des Türschlosses und deren zweite durch eine klinkenartig ausgebildete Drehfalle gebildet ist, angeordnet und stehen die beiden Drehfallen über Druck-und Zugkräfte übertragende Antriebsverbindungsmittel derart miteinander in Antriebsverbindung, daß die erste Drehfalle die treibende und die zweite Drehfalle die geschleppte Drehfalle ist. Mittels einer solcherart ausgebildeten Türschließeinrichtung ist es zwar grundsätzlich möglich, einen Zuzieheffekt alleine aus der Schließbewegung einer vermittels eines Gelenkparallelogrammes an der Fahrzeugkarosserie aufgehängten Türe abzuleiten, jedoch ist die Sicherheit des Einziehens der Türe in ihre völlige Schließstellung weitgehend von den Zufälligkeiten der Toleranzsummierung innerhalb der Tür-und Drehfallenanordnung abhängig, so daß es in unglücklichen Fällen zu einem unbeabsichtigten Öffnen einer evtl. nur unzureichend in die Schließlage eingeschwenkten Türe kommen kann.

Der Erfindung liegt daher die Aufgabe zugrunde eine ein müheloses einschwenken der Tür in ihre zur Karosserie fluchtende und verriegelte Schließlage ermöglichende Türschließeinrichtung dahingehend auszugestalten, daß sie absolut betriebssicher ist und ein unbeabsichtigtes Öffnen einer evtl. nur unzureichend in die Schließlage eingeschwenkten Türe verhindert, insbesondere soll aber eine mit wenig Aufwand herstell-und montierbare, in der Handhabung einfache, und äußerst feinfühlig verstellbare Einrichtung zur Einjustierung wenigstens einer Endlage mindestens einer der Drehfallen geschaffen werden.

Diese Aufgabe wird erfindungsgemäß durch eine Türschließeinrichtung gemäß Anspruch 1 gelöst.

Im Einzelnen wird die der Erfindung zugrundeliegende Aufgabe ferner noch dadurch gelöst, daß wenigstens einer der beiden Drehfallen ein eine ihrer Endlagen bestimmende, einstellbare Schwenkbegrenzung zugeordnet ist und daß diese Schwenkbegrenzung durch das Antriebsverbindungsmittel gebildet ist.

Die für die Aufgabenlösung im allgemeinen vorgesehene Anordnung gestattet es zunächst die unmittelbar vor ihrer zur Fahrzeugkarosserie fluchtenden Schließlage stehende Fahrzeugtüre entgegen dem Dichtungsdruck vermittels der Drehfallen an beiden Enden und gleichmäßig in ihre zur Fahrzeugkarosserie fluchtende. voll eingerastete Schließstellung zu bringen und ist darüberhinaus in einer rein mechanischen Ausführungsform mit einem geringstmöglichen Herstellungs-und Montageaufwand realisierbar. Insbesondere gelangen bei der erfindungsgemäßen Türschließeinrichtung beide Drehfallen mit dem jeweils zugehörigen Schließbolzen oder Schließbügel in eine einer Fang-oder Vorraststellung eintsprechende Eingriffslage, sobald die Fahrzeugtüre in eine vor der Türöffnung der Fahrzeugkarosserie liegende Stellung eingefahren bzw. eingeschwenkt ist. Dabei können auch die beiden Drehfallen Teile eines Türschlosses sein, dahingehend, daß am hinteren Ende der Fahrzeugtüre ein Hauptschloß und am vorderen Ende der Türe ein Zweit-oder Nebenschloß angeordnet ist. Ergänzend gestattet es die erfindungsgemäß fernerhin und im Besonderen vorgesehene Schwenkbegrenzung für wenigstens eine der beiden Drehfallen diese im Zuge der Montage der Türe hinsichtlich ihrer Endlage, insbesondere ihrer Fangstellung so auszurichten, daß unter Ausgleich gegebenfalls auch zusammenfallener Toleranzen in der Türschließeinrichtung und der Türaufhängung sowie den angrenzenden Türsäulen ein stellungs-und zeitgerechter Eingriff mit dem Schließbügel bzw. Schließbolzen gewährleistet ist.

In einer bevorzugten mechanischen Verwirklichungsform der Erfindung ist vorgesehen, daß in das die Antriebsverbindung zwischen den beiden Drehfallen bildende Antriebsmittel eine Einrichtung zum Einstellen seiner wirksamen Länge oder der wirksamen Länge eines ihrer Teile eingeschaltet ist.

Eine besonders bevorzugte Ausgestaltung besteht dabei darin, daß das die beiden Drehfallen miteinander verbindende Antriebsmittel durch einen Bowdenzug gebildet, wobei die Hülle des Bowdenzuges zugleich auch die Schwenkbegrenzung für wenigstens eine der beiden miteinander verbundenen Drehfallen bildet und in zwei untereinander vermittels eines Längenverstellers verbundene Längenabschnitte unterteilt ist.

Die Erfindung kann hinsichtlich der Ausgestaltung des Längenverstellers im Einzelnen in verschiedenen Weisen verwirklicht werden, wobei eine zweckmäßige Verwirklichungsform darin besteht, daß der die beiden Längenabschnitte der Hülle des Bowdenzuges miteinander verbindende Längenversteller aus zwei über ein Schraubgewinde axial verstellbar ineinandergreifenden Teilen besteht, wozu im Einzelnen vorgesehen sein kann, daß der Längenversteller aus einem ersten, mit dem einen Längenabschnitt der Hülle des Bowdenzuges dreh-und zugsicher verbundenen Teil und einem zweiten, mit dem anderen Längenabschnitt der Hülle des Bowdenzuges gleichfalls dreh-und zugsicher verbundenen Teil besteht, wobei die beiden Teile des Längenverstellers über ein Schraubgewinde längenverstellbar untereinander verbunden sind. Sehr zweckmäßig ist es dabei, daß das erste, mit dem einen Längenabschnitt der hülle des Bowdenzuges dreh-und zugsicher verbundene Teil des Längenverstellers durch eine ein Außengewinde aufweisende Gewindehülse und das zweite, mit dem anderen Längenabschnitt der Hülle des Bowdenzuges gleichfalls dreh-und zugsicher verbundene Teil aus einem ein Innengewinde aufweisenden Gehäuse besteht.

Da die dem Ausgleich von Toleranzen in der Tür und der Türanordnung dienende Einstellbarkeit der Schwenkbegrenzung für wenigstens eine der beiden miteinander verbundenen Drehfallen unter gegebenenfalls räumlich sehr beengten Verhältnissen und sehr feinfühlig verstellbar sein muß kann weiterhin vorgesehen sein, daß in den die beiden Längenabschnitte der Hülle des Bowdenzuges miteinander verbindenden Längenversteller eine eine die leicht zugängliche und feinfühlige Verstellbarkeit gewährleistende Antriebseinrichtung eingeschaltet ist.
Eine solche Antriebseinrichtung für den Längenversteller kennzeichnet sich in einer ersten einfachen Ausführungsform dadruch, daß das in dem durch ein Gehäuse gebildeten Teil des Längenverstellers vorgesehene Innengewinde in einem mit einer äußeren Umfangsprofilierung versehenen und zur Gewindehülse koaxial ausgerichtet, drehbar im Gehäuse gelagerten Einstellrad angeordnet ist.

In einer zweiten Ausführungsform kennzeichnet sich die Antriebseinrichtung für den Längenversteller dadurch, daß die äußere Umfangsprofilierung des ersehenen und zur Gewindehülse koaxial ausgerichtet, drehbar im Gehäuse gelagerten Einstellrades durch eine Umfangsverzahung gebildet ist und mit einer ihrerseits drehbar im Gehäuse gelagerten Antriebsschnecke im getrieblichen Eingriff steht, wobei zweckmäßigerweise die die Antriebsschnecke im Gehäuse lagernde und mit der Antriebsschnecke drehsicher verbindende, insbesondere einteilig ausgebildete Achse mit mindestens einem ihrer Enden das Gehäuse überragt und an ihrem das gehäuse überragenden Ende mit einem Werkzeugansatz, insbesondere einem Schlitz ausgestattet ist.

In weiterer Eintzelausgestaltung der Erfindung kann dann weiterhin noch vorgesehen sein, daß der in das Gehäuse eintauchenden, mit dem einen Längenabschnitt der Hülle des Bowdenzuges dreh-und zugsicher verbundenen Gewindehülse eine Verdrehsicherung zugeordnet ist, wobei vorteilhafterweise vorgesehen ist, daß die der in das Gehäuse eintauchenden Gewindehülse zugeordnete Verdrehsicherung durch eine in eine Längsnut der Gewindehülse eingreifende Madenschrauben gebildet ist.

Die Erfindung ist in der nachfolgenden Beispielsbeschreibung anhand einiger in der Zeichnung dargestellter Ausführungsbeispiele im Einzelnen beschrieben.
In der Zeichnung zeigt die
- Figur 1: eine schematische Darstellung einer ersten Ausführungform einer Türschließeinrichtung in Vorrast- und Hauptraststellung;
- Figur 2: einen Längsschnitt durch einen in die Türschließeinrichtung eingeschalteten Längenversteller für ein durch einen Bowdenzug gebildetes Antriebsmittel;
- Figur 3: einen Schnitt durch den Längenversteller entlang der Linie III-III in Figur 2.

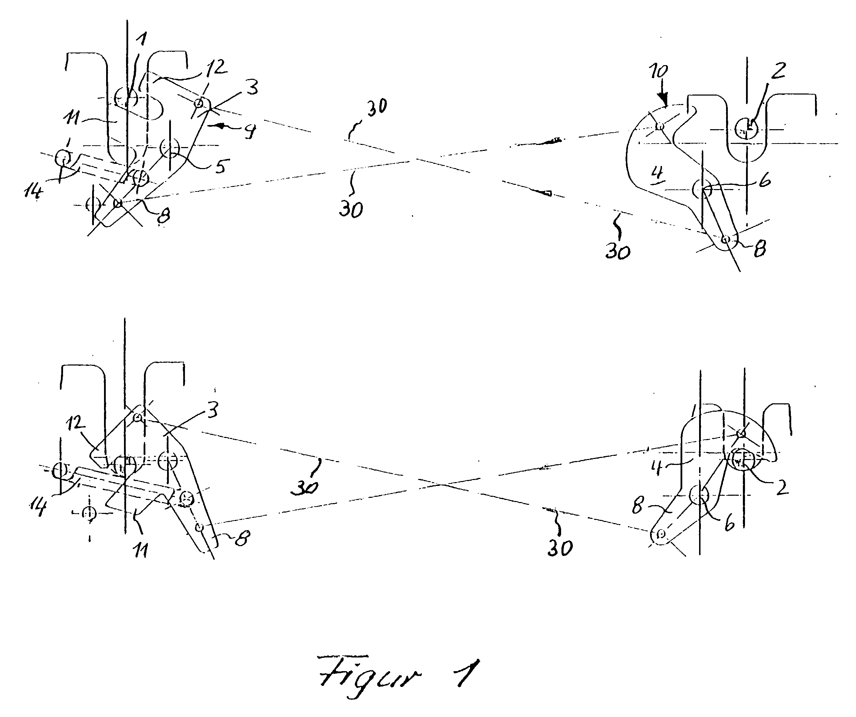

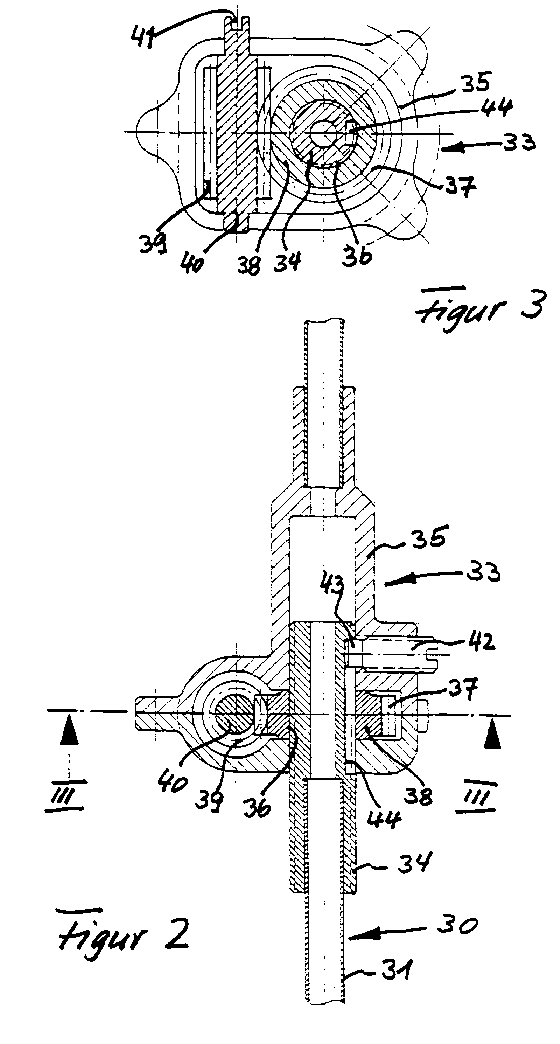

Das in der Zeichnung dargestellte Ausführungsbeispiel geht von einer im Einzelnen nicht gezeigten, vermittels eines aus wenigstens einem Tragteil und wenigstens einem Steuerteil bestehenden Gelenkparallelogrammes an einer ihrerseits gleichfalls nicht im Einzelnen gezeigten Fahrzeugkarosserie angeschlagenen Kraftwagentür, welche dieser Anlenkungscharakteristik entsprechend im Verlauf sowohl ihrer Öffnungs-als auch ihrer Schließbewegung eine von einer Querbewegung überlagerte Schwenkbewegung ausführt, aus, wobei an den beiden eine Türöffnung in der Fahrzeugkarosserie begrenzenden Türsäulen, insbesondere A-und B-Säule, jeweils ein feststehender Schließbolzen 1 bzw. 2 angeordnet ist. Türseitig ist im Bereich des vorderen Endes der Fahrzeugtüre eine erste Drehfalle 3 und im Bereich des hinteren Endes der Fahrzeugtüre eine zweite Drehfalle 4 jeweils um eine feststehende und quer zur Schwenkachse der Fahrzeugtüre ausgerichtete Achse 5 bzw. 6 schwenkbar angelenkt. Dabei ist die erste Drehfalle 3 als Gabelfalle ausgebildet und bildet gleichzeitig die Schloßfalle des Türschlosses, während die zweite Drehfalle 4 als Klinke ausgebildet ist. Die beiden Drehfallen 3 und 4 stehen jeweils über einen Bowdenzug 30 in einer zwangsweisen gegenseitigen Antriebsverbindung, wobei die Schloßfalle 3 die treibende und die Drehfalle 4 die geschleppte Drehfalle ist. Zur Herstellung günstiger Kraftverhältnisse sind dabei ferner beide Drehfallen jeweils mit einem einen Hebelarm bildenden Fortsatz 8 versehen und greifen die kreuzweise angeordneten Bowdenzüge jeweils einerseits am Hebelarm 8 der einen und am Fallenteil 9 bzw. 10 der anderen Drehfalle 3 bzw. 4 an, derart, daß die Drehfalle 4 bei einer Schwenkbewegung der die Schloßfalle bildenden Drehfalle 3 zwangsweise synchron und gleichsinnig verstellt wird. Die die Schloßfalle bildende Gabelfalle 5 weist zwei ungleich lange Gabelzinken 11 und 12 auf, wobei der erste längere Gabelzinken 11 bereits bei in einer zu ihrer Schließlage parallelen vor der Türöffnung der Fahrzeugkarosserie liegenden Stellung der Fahrzeugtüre mit dem zugehörigen Schließbolzen 1 in Anlage kommt und in dieser Stellung die Vorraststellung einnimmt. Gleichzeitig damit kommt aber auch der an der anderen Türsäule angeordnete Schließbolzen 2 mit dem Klinkenbereich der zweiten Drehfalle in Eingriff, wobei die Klinke so getaltet ist, daß der Schließbolzen hierbei nur mit einem einen Vorrastbereich markierenden Teil der Klinke 4 in Anlage gelangt. Im Verlauf der weiteren Zuziehbewegung der Fahrzeugtüre gelangt dann die die Schloßfalle bildende Drehfalle 3 in eine Hauptrast-oder Schließstellung und schleppt dabei aufgrund ihrer Koppelung mit dieser auch die zweite Drehfalle 4 in eine Verriegelungsstellung. Zugleich mit dieser weiteren Schwenkbewegung der beiden Drehfallen 3 und 4 wird die Fahrzeugtüre entgegen dem Dichtungsdruck in ihre zur Fahrzeugkarosserie fluchtende und verriegelte Schließendlage gezogen. Der zweiten Drehfalle 4 ist bei dem in der Figur 1 dargestellten Ausführungsbeispiel eine Zugfeder 13 zugeordnet, welche die Drehfalle 4 und infolge deren Koppelung mit dieser auch die die Schloßfalle bildende Drehfalle 3 in Richtung auf ihre Freigabestellung beaufschlagt.
Bei den jeweils durch einen Bowdenzug 30 gebildeten Antriebsverbindungen zwischen der vermittels des Türgriffes betätigbaren Schloßfalle 3 und der zweiten Drehfalle 4 bildet die Hülle 31/32 des jeweiligen Bowdenzuges 30 mit ihrem wenigstens einen Ende zugleich auch die Schwenkbegrenzung für wenigstens eine der untereinander gekoppelten Drehfallen 3 und 4 bildet. Die Hülle 31/32 des Bowdenzuges 30 ist in zwei untereinander über einen Längenversteller 33 verbundene Längenabschnitte 31 und 32 unterteilt, wobei mit dem einen Längenabschnitt 31 der Hülle des Bowdenzuges eine mit einem Außengewinde ausgestattete Gewindehülse 34 dreh-und zugsicher verbunden ist, während mit dem anderen Längenabschnitt 32 der Hülle des Bowdenzuges ein mit einem Innengewinde ausgestattetes Gehäuse 35 dreh-und zugsicher verbunden ist. Das im Gehäuse 35 angeordnete Innengewinde 36 ist am Innenumfang eines zur Gewindehülse 34 koaxial zur Gewindehülse 34 im Gehäuse 35 gelagerten, an seinem Außenumfang mit einer Umfangsverzahnung 37 ausgestatteten Einstellrades 38 angeordnet. Dem Antrieb des Einstellrades 38 ist eine um eine zur Achse der Gewindehülse 34 senkrechte Achse 40 drehbar im Gehäuse 35 gelagerte Antriebsschnecke 39 zugeordnet, wobei im gezeigten Ausführungsbeispiel die Schnecke 39 mit der Achse 40 einteilig ausgebildet ist. Die Achse 40 ist an ihrem einen, die eine Wandung des Gehäuses 35 durchdringenden Ende mit einem als Schraubenzieherschlitz 41 ausgestattet. Zur drehsicheren Abstützung der in das Gehäuse 35 eingreifenden Gewindehülse 34 ist eine Madenschraube 42 vorgesehen, welchein das Gehäuse 35 eingeschraubt ist und über ihr freies Stirnende 43 mit einer axialen Nutausnehmung 44 in der Gewindehülse 34 im formschlüssigen Eingriff steht.

## Patentansprüche

1. Türschließeinrichtung für Kraftwagentüren, welche vermittels eines insbesondere aus wenigstens einem Tragteil und wenigstens einem Steuerteil bestehenden Gelenkparallelogrammes um zwei Achsen schwenkbar, derart an der Fahrzeugkarosserie aufgehängt sind, daß sie beim Öffnen und Schließen der Türe jeweils eine von einer Querbewegung überlagerte Schwenkbewegung ausführen und bei welchen an den beiden eine Türöffnung in der Fahrzeugkarosserie begrenzenden Türsäulen, insbesondere A-und B-Säule jeweils mindestens ein feststehender Schließbügel oder Schließbolzen (1 bzw. 2) und an beiden Stirnenden der Kraftwagentüre mindestens je eine Drehfalle (3 bzw. 4) angeordnet ist, deren erste durch die Schloßfalle (3) des Türschlosses und deren zweite durch eine klinkenartig ausgebildete Drehfalle (4) gebildet ist, wobei die beiden Drehfallen (3 und 4) über Druck-und Zugkräfte übertragende Antriebsverbindungsmittel (30) derart miteinander in Antriebsverbindung stehen, daß die erste Drehfalle (3) die treibende und die zweite Drehfalle die geschleppte Drehfalle (4) ist,
und wobei
die beiden Drehfallen (3 bzw. 4) jeweils einen eine Fang-oder Vorraststellung der Türe und einen eine Schließ-oder Verriegelungsstellung der Türe markierenden Eingriffsbereich (11 und 12) aufweisen und wenigstens einer der beiden Drehfallen ( 3 und 4) eine, eine ihrer Endlagen bestimmende einstellbare Schwenkbegrenzung zugeordnet ist, wobei diese Schwenkbegrenzung durch das Antriebsverbindungsmittel (30) gebildet ist.

2. Türschließeinrichtung nach Anspruch 1, dadurch gekennzeichnet, daß in das die Antriebsverbindung zwischen den beiden Drehfallen (3 un 4) bildende Antriebsverbindungsmittel (30) eine Einrichtung (33) zum Einstellen seiner wirksamen Länge oder der wirksamen Länge eines ihrer Teile eingeschaltet ist.

3. Türschließeinrichtung nach Anspruch 1 und 2, dadurch gekennzeichnet daß das die beiden Drehfallen (3 und 4) miteinander verbindende Antriebsverbindungsmittel durch einen Bowdenzug (30) gebildet ist, wobei die Hülle des Bowdenzuges (30) die Schwenkbegrenzung für wenigstens eine der beiden untereinander verbundenen Drehfallen (3 und 4) bildet und in zwei untereinander vermittels eines Längenverstellers (33) verbundene Längenabschnitte (31 und 32) unterteilt ist.

4. Türschließeinrichtung nach Anspruch 3, dadurch gekennzeichnet, daß der Längenversteller (33) aus einem ersten, mit dem einen Längenabschnitt (31) der Hülle des Bowdenzuges (30) dreh-und zugsicher verbundenen Teil (34) und einem zweiten, mit dem anderen Längenabschnitt (32) der Hülle des Bowdenzuges (30) gleichfalls dreh-und zugsicher verbundenen Teil (35) besteht, wobei die beiden Teile des Längenverstellers (33) über ein Schraubgewinde längenverstellbar untereinander verbunden sind.

5. Türschließeinrichtung nach Anspruch 4, dadurch gekennzeichnet, daß aus einem das erste, mit dem einen Längenabschnitt (31) der Hülle des Bowdenzuges (30) dreh-und zugsicher verbundene Teil des Längenverstellers (33) durch eine ein Außengewinde aufweisende Gewindehülse (34) und das zweite, mit dem anderen Längenabschnitt (32) der Hülle des Bowdenzuges [30) gleichfalls dreh-und zugsicher verbundene Teil aus einem ein Innengewinde (36) aufweisenden Gehäuse (35) besteht.

6. Türschließeinrichtung nach Anspruch 3 bis 5, dadurch gekennzeichnet, daß in den die beiden Längenabschnitte (31 und 32) der Hülle des Bowdenzuges (30) miteinander verbindenden Längenversteller (33) eine eine feinfühlige Verstellbarkeit gewährleistende Antriebseinrichtung eingeschaltet ist.

7. Türschließeinrichtung nach Anspruch 6, dadurch gekennzeichnet, daß das in dem durch ein Gehäuse (35) gebildeten Teil des Längenverstellers (33) vorgesehene Innengewinde (36) in einem mit einer äußeren Umfangsprofilierung versehenen und zur Gewindehülse (34) koaxial ausgerichtet, drehbar im Gehäuse (35) gelagerten Einstellrad (38) angeordnet ist.

8. Türschließeinrichtung nach Anspruch 7, dadurch gekennzeichnet, daß die äußere Umfangsprofilierung des zur Gewindehülse (34) koaxial ausgerichtet, drehbar im Gehäuse (35) gelagerten Einstellrades (38) durch eine Umfangsverzahung (37) gebildet ist und mit einer ihrerseits drehbar im Gehäuse (35) gelagerten Antriebsschnecke (39) im getrieblichen Eingriff steht.

9. Türschließeinrichtung nach Anspruch 8, dadurch gekennzeichnet, daß die die Antriebsschnecke (39) im Gehäuse (35) lagernde und mit der Antriebsschnecke (39) drehsicher verbundende, insbesondere einteilig ausgebildete Achse (40) mit mindestens einem ihrer Enden das Gehäuse (35) überragt und an ihrem das Gehäuse (35) überragenden Ende mit einem Werkzeugansatz, insbesondere einem Schlitz (41) ausgestattet ist.

10. Türschließeinrichtung nach einem der Ansprüche 5 bis 9, dadurch gekennzeichnet, daß der in das Gehäuse (35) eintauchenden, mit dem einen Längenabschnitt (31) der Hülle des Bowdenzuges (30) dreh-und zugsicher verbundenen Gewindehülse (34) eine Verdrehsicherung zugeordnet ist.

11. Türschließeinrichtung nach Anspruch 10, dadurch gekennzeichnet, daß die der in das Gehäuse (35) eintauchenden Gewindehülse (34) zugeordnete Verdrehsicherung durch eine in eine Längsnut (44) der Gewindehülse (34) eingreifende Madenschraube (42) gebildet ist.

## Claims

1. Door closing system for motor vehicle doors, which are hung on the vehicle body so as to be able to pivot around two axes by means of a parallelogram-type coupling, comprising at least one support part and at least one control part, in such a manner that they respectively perform a pivoting movement superposed by a transverse movement upon opening and closure of the doors, and in which at least one fixed closing strap or closing bolt (1 and 2) is respectively arranged on the two door pillars defining a door opening in the vehicle body, in particular A and B pillar, and at least one respective rotary latch (3 and 4) is arranged on both face ends of the vehicle doors, the first being formed by the lock latch (3) of the door lock and the second being formed by a rotary latch (4) of catch-like construction, whereby the two rotary latches (3 and 4) stand in driving connection with one another via drive connection means (30) transmitting pressure and tensile forces in such a way that the first rotary latch (3) is the driving latch and the second rotary latch (4) is the driven latch,
and whereby the two rotary latches (3 and 4) respectively have an engagement area (11 and 12) characterising a capture or initial latching position of the doors and a closing or locking position of the doors, and at least one of the two rotary latches (3 and 4) has an adjustable pivoting restriction means determining their end positions allocated to it, this pivoting restriction means being formed by the drive connection means (30).

2. Door closing system according to Claim 1, characterised in that a means (33) for adjusting the effective length of the drive connection means or the effective length of one of its parts is connected into the drive connection means (30) forming the drive connection between the two rotary latches (3 and 4).

3. Door closing system according to Claim 1 and 2, characterised in that the drive connection means connecting the two rotary latches (3 and 4) to one another is formed by a Bowden cable (30), whereby the casing of the Bowden cable (30) forms the pivoting restriction means for at least one of the two interconnected rotary latches (3 and 4) and is divided into two length sections (31 and 32) interconnected by means of a length adjustment means (33).

4. Door closing system according to Claim 3, characterised in that the length adjustment means (33) comprises a first part (34) connected against rotation and torsion to one length section (31) of the casing of the Bowden cable (30) and a second part (35) also connected against rotation and torsion to the other length section (32) of the casing of the Bowden cable (30), whereby the two parts of the length adjustment means (33) are interconnected via a screw thread so as to be adjustable in length.

5. Door closing system according to Claim 4, characterised in that the first part of the length adjustment means (33) connected against rotation and torsion to one length section (31) of the casing of the Bowden cable (30) is formed by a threaded casing (34) having an external thread, and the second part also connected against rotation and torsion to the other length section (32) of the casing of the Bowden cable (30) comprises a housing (35) having an internal thread (36).

6. Door closing system according to Claim 3 to 5, characterised in that a drive system assuring fine adjustability is connected in the length adjustment means (33) connecting the two length sections (31 and 32) of the casing of the Bowden cable (30) to one another.

7. Door closing system according to Claim 6, characterised in that the internal thread (36) provided in the part of the length adjustment means (33) formed by a housing (35) is arranged in an adjustment wheel (38), which is provided with outer peripheral profiling, is aligned coaxially to the threaded casing (34) and is rotatably mounted in the housing (35).

8. Door closing system according to Claim 7, characterised in that the outer peripheral profiling of the adjustment wheel (38), which is aligned coaxially to the threaded casing (34) and rotatably mounted in the housing (35), is formed by a peripheral tooth arrangement (37) and meshes with a drive worm (39) itself rotatably mounted in the housing (35).

9. Door closing system according to Claim 8, characterised in that the shaft member (40) housing the drive worm (39) in the housing (35) and connecting with the drive worm (39) against rotation, in particular constructed in one piece, projects above the housing (35) with at least one of its ends and at its end projecting above the housing (35) is equipped with a tool attachment, in particular a slot (41).

10. Door closing system according to one of Claims 5 to 9, characterised in that a rotation locking means is allocated to the threaded casing (34) penetrating into the housing (35) and connected to one length section (31) of the casing of the Bowden cable (30) against rotation and torsion.

11. Door closing system according to Claim 10, characterised in that the rotation locking means allocated to the threaded casing (34) penetrating into the housing (35) is formed by a headless screw (42) engaging into a longitudinal groove (44) of the threaded casing (34).

## Revendications

1. Dispositif de fermeture pour portes de véhicules automobiles qui sont suspendues sur la carrosserie du véhicule et articulées autour de deux axes grâce à un parallélogramme articulé composé d'au moins une partie de support et d'une partie de commande de sorte qu'elles effectuent lors de leur ouverture et de leur fermeture un mouvement perpendiculaire se superposant à leur mouvement de pivotement, sur chacun des deux montants de porte délimitant l'évidement dans la carrosserie destiné à la porte, en particulier sur les montants A et B, est disposé au moins une bride ou un boulon de fermeture (1), respectivement (2), sur chacune des deux extrémités frontales de la porte de véhicule automobile est disposé au moins un loquet basculant (3), respectivement (4), dont le premier (3) constitue le pêne de la serrure et dont le second est constitué d'un cliquet, les deux loquets basculants (3), (4) étant reliés entre eux par des moyens de liaison et d'entraînement (30) transmettant des forces de pression et de traction de sorte que le premier loquet basculant (3) forme le loquet entraînant et le second (4) le loquet entraîné, *caractérisé en ce que* les deux loquets basculants (3), (4) présentent chacun deux zones d'engagement (11), (12) dont l'une correspond à une position de retenue ou de préfermeture, l'autre à une position de fermeture complète ou de verrouillage *et en ce que* au moins l'un des loquets basculants (3), (4) coopère avec une butée limitant le mouvement de pivotement du loquet, réglable pour déterminer l'une des positions extrêmes de celui-ci et constituée du moyen d'entraînement (30).

2. Dispositif de fermeture selon la revendication 1 *caractérisé par* un dispositif (33) qui est inséré dans le moyen de liaison et d'entraînement (30) reliant les deux loquets basculants (3), (4) et qui permet de régler la longueur efficace dudit moyen de liaison et d'entraînement ou d'une des parties de ce dernier.

3. Dispositif de fermeture selon les revendications 1 et 2 *caractérisé en ce que* le moyen de liaison et d'entraînement reliant les deux loquets basculants (3), (4) est constitué d'un câble Bowden (30) dont la gaine constitue la butée limitant le pivotement d'au moins l'un des loquets basculants (3), (4) reliés entre eux et est divisée en deux segments longitudinaux (31), (32) reliés entre eux par un régulateur de longueur (33).

4. Dispositif de fermeture selon la revendication 3 *caractérisé en ce que* le régulateur de longueur (33) se compose d'une première partie (34) assemblée sans possibilité de rotation ni de traction avec l'un des segments longitudinaux (31) de la gaine du câble Bowden (30) et d'une seconde partie (35) assemblée également sans possibilité de rotation ni de traction avec l'autre segment longitudinal (32) de la gaine dudit câble Bowden (30), les deux parties du régulateur de longueur (33) étant reliées entre elles par un filet de vis permettant de régler la longueur.

5. Dispositif de fermeture selon la revendication 4 *caractérisé en ce que* la première partie du régulateur de longueur (33) qui est assemblée sans possibilité de rotation ni de traction avec l'un des segments longitudinaux (31) de la gaine du câble Bowden (30), est constituée d'une douille (34) pourvue d'un filetage tandis que sa seconde partie assemblée également sans possibilité de rotation ni de traction avec l'autre segment longitudinal (32) de la gaine du câble Bowden (30) est constituée d'un boîtier (35) pourvu d'un taraudage (36).

6. Dispositif de fermeture selon les revendications 3 à 5 *caractérisé par* un organe d'entraînement qui est intégré dans le régulateur de longueur (33) reliant les deux segments longitudinaux (31), (32) de la gaine du câble Bowden (30) et qui garantit un réglage très sensible.

7. Dispositif de fermeture selon la revendication 6 *caractérisé en ce que* le taraudage (36) prévu dans la partie du régulateur de longueur constituée d'un boîtier (35), est disposé à l'intérieur d'une roue de réglage (38) pourvue d'un profilage périphérique extérieur et logée en pouvant tourner dans le boîtier (35) coaxialement à la douille filetée (34).

8. Dispositif de fermeture selon la revendication 7 *caractérisé en ce que* le profilage périphérique extérieur de la roue de réglage (38) logée en pouvant tourner dans le boîtier (35) coaxialement à la douille filetée (34), est constitué d'une denture périphérique coopérant par clabotage avec un pignon à vis sans fin (39) logé dans le boîtier (35) en pouvant tourner.

9. Dispositif de fermeture selon la revendication 8 *caractérisé en ce que* l'arbre (40) d'une seule pièce qui porte le pignon à vis sans fin (39) logé dans le boîtier (35) et qui est assemblé sans possibilité de rotation avec ledit pignon à vis sans fin, est saillant sur ledit boîtier (35) par au moins l'une de ses extrémités pourvue d'un outil, en particulier d'une fente (41).

10. Dispositif de fermeture selon l'une des revendications 5 à 9 *caractérisé en ce que* la douille filetée (34) pénétrant dans le boîtier (35), assemblée sans possibilité de rotation ni de traction avec l'un des segments longitudinaux (31) de la gaine du câble Bowden (30), coopère avec un organe de sûreté contre la torsion.

11. Dispositif de fermeture selon la revendication 10 *caractérisé en ce que* l'organe de sûreté contre la torsion coopérant avec la douille filetée (34) qui pénètre dans le boîtier (35) est constitué d'une vis sans tête (42) s'engageant dans une rainure longitudinale (44) de la douille filetée (34).
